# EUROPEAN PATENT SPECIFICATION

(11) **EP 2 586 516 B1**
(45) Date of publication and mention of the grant of the patent: **28.06.2017**
(21) Application number: 12180675.6
(22) Date of filing: 16.08.2012
(51) Int. Cl.: B01D 53/00, B01D 53/62, F25J 3/06, F28F 1/12

(54) **Systems and methods for treating carbon dioxide**
Systeme und Verfahren zur Behandlung von Kohlendioxid
Systèmes et procédés permettant de traiter le dioxyde de carbone

(30) Priority: 31.10.2011 US 201113285375
(43) Date of publication of application: 01.05.2013
(73) Proprietor: GENERAL ELECTRIC COMPANY, Schenectady, NY 12345 (US)
(72) Inventor: Zia, Jalal Hunain, Niskayuna, NY New York 12309 (US); Hofer, Douglas Carl, Niskayuna, NY New York 12309 (US); Lissianski, Vitali Victor, Niskayuna, NY New York 12309 (US); Sanborn, Stephen Duane, Niskayuna, NY New York 12309 (US); Arik, Mehmet, Istanbul (TR); Shisler, Roger Allen, Niskayuna, NY New York 12309 (US); Wickersham, Paul Brian, Niskayuna, NY New York 12309 (US)
(74) Representative: Cleary, Fidelma

(56) References cited:
- WO-A2-2011/018577
- DE-A1- 19 940 371
- FR-A1- 2 949 553
- US-A- 2 738 658
- US-A1- 2004 148 961

## Description

The subject matter described herein relates generally to gas treatment systems and, more particularly, to gas treatment system for use in treating carbon dioxide (CO₂).

At least some known power generation systems include a combustor and/or boiler to generate steam that is used in a steam turbine generator. During a typical combustion process within a combustor or boiler, for example, a flow of combustion gases, or flue gases, is produced. Known combustion gases contain combustion products including, but not limited to, carbon, fly ash, carbon dioxide, carbon monoxide, water, hydrogen, nitrogen, sulfur, chlorine, arsenic, selenium, and/or mercury.

At least some known power generation systems include a gas treatment system for use in reducing an amount of combustion products within the flue gases. Known gas treatment systems include a low-temperature cooling system for separating CO₂ from the flue gases. During operation, the low-temperature cooling system cools a flue gas stream to form solid CO₂ from gaseous CO₂ suspended within the flue gas stream. In addition, at least some known gas treatment systems include a low-temperature solids pump for use in transporting the solid CO₂ from the low-temperature cooling system to a CO₂ sequestration system for sequestration and deposition of the CO₂. During operation, the low-temperature cooling system transfers a refrigeration value to the flue gas stream to form solid CO₂. As the low-temperature solids pump conveys the solid CO₂ fro

m the cooling system, at least some of the refrigeration value may be lost to heat generated from operation of the solids pump. The loss of refrigeration value through the solids pump increases the cost of operating the gas treatment system by increasing an amount of energy required to cool the flue gas stream.

A method for producing at least one gas having a low CO₂ content and at least one fluid having a high CO₂ content is described in FR 2949553.

### BRIEF DESCRIPTION OF THE INVENTION

In one aspect, a heat exchange assembly for treating carbon dioxide (CO₂) is provided. The heat exchange assembly includes a housing that includes an inlet, an outlet, and an inner surface that defines a cavity extending between the inlet and the outlet. The housing is configured to receive solid CO₂ through the inlet. At least one heat exchange tube extends through the housing. The heat exchange tube is oriented to contact solid CO₂ to facilitate transferring heat from solid CO₂ to a heat exchanger fluid being channeled through the heat exchange tube to facilitate converting at least a portion of solid CO₂ into liquid CO₂. The heat exchange assembly is configured to recover a refrigeration value from the solid CO₂ and transfer at least a portion of the recovered refrigeration value to a flue gas.

In another aspect, a gas treatment system for use in treating carbon dioxide (CO₂) in a flue gas is provided. The gas treatment system includes a cooling system coupled to a source of flue gas and configured to receive a flow of flue gas from the source. The cooling system is configured to cool gaseous CO₂ suspended within the flue gas to form solid CO₂. A heat exchange assembly as described above is coupled to the cooling system for receiving a flow of solid CO₂ from the cooling system.

In yet another aspect, a method of treating carbon dioxide (CO₂) is provided. The method includes channeling a flue gas containing CO₂ to a cooling system to cool the flue gas to form solid CO₂, and channeling solid CO₂ to a heat exchanger assembly. The heat exchanger assembly includes a housing that is configured to receive solid CO₂ therein, and at least one heat exchange tube extending through the housing. A pressure within the housing is adjusted to maintain the housing pressure within a predefined range of pressures to prevent re-sublimation of solid CO₂. A flow of heat exchange fluid is channeled through the at least one heat exchange tube to facilitate a transfer of heat from solid CO₂ to the heat exchange fluid to convert at least a portion of solid CO₂ into liquid CO₂, and to recover a refrigeration value from the CO₂. At least a portion of the recovered refrigeration value is transferred to the flue gas to facilitate cooling the flue gas.

### BRIEF DESCRIPTION OF THE DRAWINGS

Embodiments of the present invention will now be described, by way of example only, with reference to the accompanying drawings in which:
FIG. 1 is a schematic view of an exemplary power generation system.
FIG. 2 is a schematic view of a heat exchanger assembly that does not fall within the scope of the claims.
FIGS. 3-4 are schematic views of embodiments of a heat exchanger assembly that may be used with the power generation system shown in FIG. 1.
FIG. 5 is an alternative embodiment of the power generation system shown in FIG. 1.
FIG. 6 is another embodiment of the power generation system shown in FIG. 1.
FIG. 7 is a flow chart of an exemplary method that may be used to treat carbon dioxide generated during operation of the power generation system shown in FIG. 1.

### DETAILED DESCRIPTION OF THE INVENTION

The exemplary systems and methods described herein overcome at least some disadvantages of known gas treatment systems by providing a gas treatment system that includes a heat exchange assembly that is configured to transfer heat from a heat exchange fluid to solid CO₂ to facilitate recovering a refrigeration value from solid CO₂. Moreover, the heat exchange assembly is configured to maintain CO₂ in solid-liquid phase equilibrium to enable the heat exchange assembly to transfer heat to solid CO₂ to facilitate forming liquid CO₂ for use in pre-cooling a flue gas. By providing a gas treatment system that includes a heat exchange assembly configured to recover a refrigeration value from solid CO₂, the cost of treating CO₂ suspended within a flue gas is reduced as compared to known gas treatment systems.

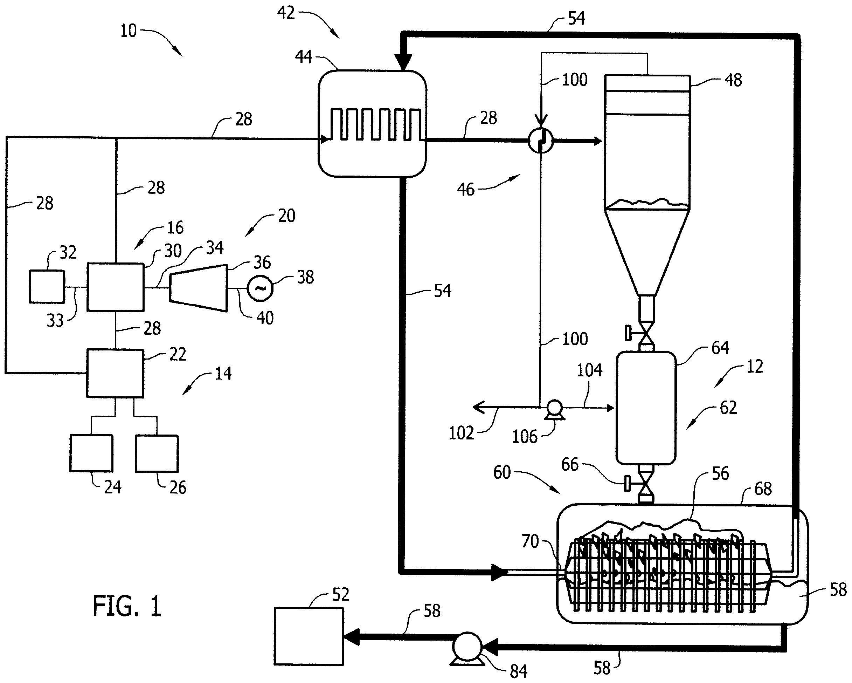

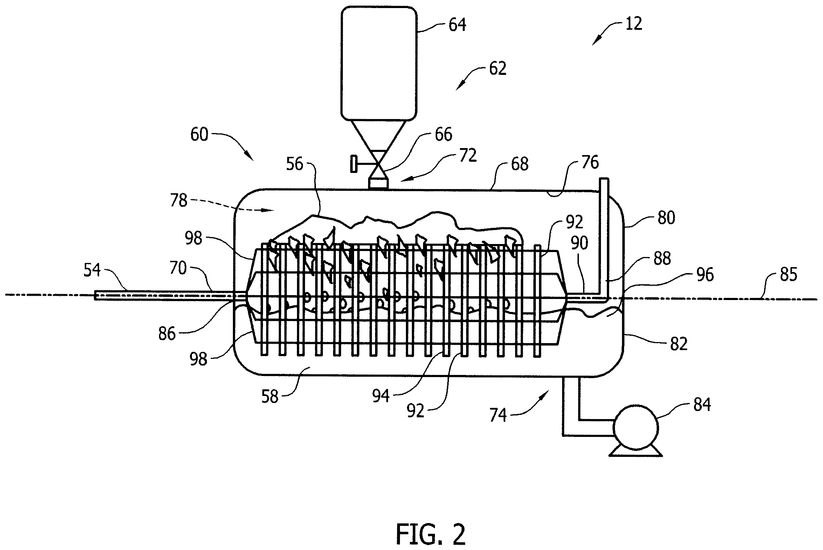

FIG. 1 is a schematic view of an exemplary power generation system 10. FIG. 2 is a schematic view of a heat exchange assembly 12 that may be used with power generation system 10 but which does not fall within the scope of the claims. The power generation system 10 includes a combustor assembly 14, a steam generation assembly 16 downstream of combustor assembly 14, and a steam turbine engine 20 coupled to steam generation assembly 16. Combustor assembly 14 includes at least one combustor 22, a fuel supply system 24, and an air supply system 26. Fuel supply system 24 is coupled to combustor 22 for channeling a flow of fuel such as, for example, coal to combustor 22. Alternatively, fuel supply system 24 may channel any other suitable fuel, including but not limited to, oil, natural gas, biomass, waste, and/or any other fossil and/or renewable fuel that enables power generation system 10 to function as described herein. In addition, air supply system 26 is coupled to combustor 22 for channeling a flow of air to combustor 22. Combustor 22 is configured to receive a predetermined quantity of fuel and air from fuel supply system 24 and air supply system 26, respectively, and ignite the fuel/air mixture to generate combustion or flue gases. Moreover, combustor 22 channels a flow of flue gases 28 to steam generation assembly 16 to generate steam that is channeled to steam turbine engine 20 for use in generating a power load.

In the exemplary embodiment, steam generation assembly 16 includes at least one heat recovery steam generator (HRSG) 30 that is coupled in flow communication with a boiler feedwater assembly 32. HRSG 30 receives a flow of boiler feedwater 33 from boiler feedwater assembly 32 to facilitate heating boiler feedwater 33 to generate steam. HRSG 30 also receives flue gases 28 from combustor assembly 14 to further heat boiler feedwater 33 to generate steam. HRSG 30 is configured to facilitate transferring heat from flue gases 28 to boiler feedwater 33 to generate steam, and channel steam 34 to steam turbine engine 20. Steam turbine engine 20 includes one or more steam turbines 36 that are rotatably coupled to a power generator 38 with a drive shaft 40. HRSG 30 discharges steam 34 towards steam turbine 36 wherein thermal energy in the steam is converted to mechanical rotational energy. Steam 34 imparts rotational energy to steam turbine 36 and to drive shaft 40, which subsequently drives power generator 38 to facilitate generating a power load.

In the exemplary embodiment, power generation system 10 includes a gas treatment system 42 that is downstream from combustor assembly 14 and steam generation assembly 16. Gas treatment system 42 is configured to receive flue gases 28 exhausted from combustor assembly 14 and/or steam generation assembly 16 to facilitate removing combustion products including, but not limited to, carbon, fly ash, carbon dioxide, carbon monoxide, water, hydrogen, nitrogen, sulfur, chlorine, arsenic, selenium, and/or mercury from the flue gases.

In the exemplary embodiment, gas treatment system 42 includes a flue gas pre-cooling system 44, a low-temperature cooling system 46 downstream of flue gas pre-cooling system 44, a CO₂ separator 48 downstream of cooling system 46, heat exchange assembly 12 downstream of cooling system 46, and a CO₂ utilization system 52 downstream of heat exchange assembly 12. Flue gases 28 including gaseous CO₂ and nitrogen (N₂) are channeled to flue gas pre-cooling system 44 from combustor assembly 14 and/or steam generation assembly 16. Flue gas pre-cooling system 44 facilitates a heat transfer from flue gases 28 to a heat exchange fluid 54 being channeled through flue gas pre-cooling system 44 to facilitate reducing a temperature of flue gases 28. Pre-cooling system 44 channels the cooled flue gases 28 to cooling system 46.

Cooling system 46 is configured to treat flue gases 28 to cool gaseous CO₂ within flue gases 28 to form solid CO₂. Cooling system 46 channels cooled flue gases 28 and solid CO₂ to CO₂ separator 48 to facilitate separating solid CO₂ and N₂ from flue gases 28. CO₂ separator 48 channels solid CO₂ 56 to heat exchange assembly 12 to facilitate transferring heat from heat exchange fluid 54 to solid CO₂ 56. Moreover, heat exchange assembly 12 is configured to facilitate transferring of heat from solid CO₂ 56 to heat exchange fluid 54 being channeled through heat exchange assembly 12 to facilitate converting solid CO₂ 56 to liquid CO₂ 58. Moreover, heat exchange assembly 12 is configured to recover a refrigeration value from solid CO₂ 56 and transfer at least a portion of the recovered refrigeration value to the flue gases 28 to facilitate cooling flue gases 28. In addition, heat exchange assembly 12 is configured to channel liquid CO₂ 58 to CO₂ utilization system 52 for utilization of rich CO₂. In one embodiment, CO₂ utilization system 52 includes a sequestration system for sequestration of rich CO₂. Alternatively, utilization system 52 may include any system configured to use CO₂ for any purpose. In the exemplary embodiment, heat exchange assembly 12 is also configured to adjust a temperature and a pressure within heat exchange assembly 12 such that CO₂ within heat exchange assembly 12 is in solid-liquid phase equilibrium.

Heat exchange assembly 12 includes a heat exchanger 60 and a lockhopper assembly 62. Lockhopper assembly 62 is coupled between heat exchanger 60 and CO₂ separator 48 for channeling solid CO₂ 56 from CO₂ separator 48 to heat exchanger 60. Lockhopper assembly 62 includes a tank 64 that is configured to receive solid CO₂ 56 from CO₂ separator 48, and a valve assembly 66 coupled between tank 64 and heat exchanger 60 to enable solid CO₂ 56 to be selectively channeled to heat exchanger 60 from tank 64. Lockhopper assembly 62 is configured to adjust a pressure within tank 64 such that a pressure within tank 64 is within a range of pressures such that solid CO₂ 56 remains in the solid phase. In addition, lockhopper assembly 62 is configured to enable solid CO₂ 56 to be gravity fed from tank 64 into heat exchanger 60. In the exemplary embodiment, lockhopper assembly 62 is configured to maintain an interior pressure equal to about 7 atm.

Heat exchanger 60 includes a housing 68 and at least one heat exchange tube 70 that extends through housing 68. Housing 68 includes an inlet 72, an outlet 74, and an inner surface 76 that defines a cavity 78 extending between inlet 72 and outlet 74. Housing 68 is configured to maintain a pressure within cavity 78 within a predefined range of pressures to facilitate preventing re-sublimation of solid CO₂ 56 to gaseous CO₂ within cavity 78. Housing 68 is configured to maintain an internal pressure of about 7 atm. Housing 68 is configured to maintain an internal pressure between about 1 atm to about 10 atm. Moreover, loclchopper assembly 62 channels a flow of pressurized fluid to housing cavity 78 through valve assembly 66 to pressurize housing 68 to a predefined pressure. Inner surface 76 includes an upper portion 80, and a lower portion 82 that extends below upper portion 80. Inlet 72 extends through upper portion 80 and is coupled to lockhopper assembly 62 for receiving solid CO₂ 56 from lockhopper assembly 62. In addition, housing lower portion 82 is sized and shaped to contain liquid CO₂ 58 therein. Outlet 74 extends through lower portion 82, and is coupled to CO₂ utilization system 52. More specifically, heat exchange assembly 12 includes a liquid CO₂ pump 84 that is coupled between heat exchanger 60 and CO₂ utilization system 52 for channeling liquid CO₂ 58 from lower portion 82 to CO₂ utilization system 52.

Heat exchange tube 70 extends though housing cavity 78, and is configured to channel a flow of heat exchange fluid 54 through housing cavity 78. Heat exchange tube 70 extends along a centerline axis 85 between a first end 86, and a second end 88. Heat exchange tube 70 is oriented within cavity 78 such that an outer surface 90 of heat exchange tube 70 contacts solid CO₂ 56 to facilitate transferring heat from heat exchange fluid 54 to solid CO₂ 56 to increase a temperature of solid CO₂ 56 and facilitate converting at least a portion of solid CO₂ 56 to liquid CO₂ 58.

Heat exchange assembly 12 also includes a plurality of fins 92 that extend outwardly from tube outer surface 90. Each fin 92 includes an outer surface 94 that is configured to contact solid CO₂ 56 to facilitate transferring heat from heat exchange fluid 54 to solid CO₂ 56 to facilitate forming liquid CO₂ 58 from solid CO₂ 56, and to cool heat exchange fluid 54 to recover a refrigeration value from solid CO₂ 56. Each fin 92 is oriented within cavity 78 such that solid CO₂ 56 is at least partially supported by heat exchange tube 70 within housing upper portion 80. Moreover, each fin 92 is oriented to channel liquid CO₂ 58 formed within cavity 78 from upper portion 80 to lower portion 82 such that liquid CO₂ 58 is collected within a pool 96 formed within lower portion 82. In the exemplary embodiment, each fin 92 is oriented substantially perpendicular to centerline axis 85. In addition, each fin 92 is at least partially submerged within liquid CO₂ 58 to facilitate transferring heat from liquid CO₂ 58 to heat exchange fluid 54. In one embodiment, heat exchange tube 70 includes a plurality of pipes 98 that are each coupled to one or more fins 92. Each pipe 98 is oriented within cavity 78, and extends between first end 86 and second end 88. One or more pipes 98 are at least partially submerged within liquid CO₂ 58 to facilitate transferring heat from liquid CO₂ 58 to heat exchange fluid 54.

During operation of system 10, combustor 22 receives a predefined quantity of fuel from fuel supply system 24, and receives a predefined quantity of air from air supply system 26. Combustor 22 injects the fuel into the air flow, ignites the fuel-air mixture to expand the fuel-air mixture through combustion, and generates high temperature flue gases. Combustor 22 channels flue gases 28 to HRSG 30 to facilitate generating steam from flue gases 28. In addition, boiler feedwater assembly 32 channels a flow of boiler feedwater 33 to HRSG 30. HRSG 30 transfers heat from flue gases 28 to boiler feedwater 33 to facilitate heating boiler feedwater 33 to generate steam 34. HRSG 30 discharges steam 34 towards steam turbine 36 wherein thermal energy in the steam is converted to mechanical rotational energy. HRSG 30 and/or combustor 22 discharge flue gases 28 toward gas treatment system 42 to facilitate treating carbon dioxide CO₂ suspended within flue gases 28.

In the exemplary embodiment, HRSG 30 and/or combustor 22 channel flue gases to pre-cooling system 44. Pre-cooling system 44 transfers heat from flue gases 28 to heat exchange fluid 54 to reduce a temperature of flue gases 28. Pre-cooling system 44 discharges flue gases 28 towards cooling system 46 to facilitate generating solid CO₂ from gaseous CO₂ suspended within flue gases 28. In addition, pre-cooling system 44 channels heat exchange fluid 54 towards heat exchange assembly 12. Cooling system 46 cools flue gases 28 to generate solid CO₂ and channels cooled flue gases 28 and solid CO₂ 56 to CO₂ separator 48 to facilitate separating solid CO₂ and N₂ from flue gases 28. CO₂ separator 48 discharges solid CO₂ towards lockhopper assembly 62. In addition, CO₂ separator 48 channels a flow of CO₂ lean gas 100 that includes a mixture of CO₂ and N₂ to cooling system 46 and/or lockhopper assembly 62. In one embodiment, CO₂ lean gas 100 discharged from CO₂ separator 48 is divided into a first sub-stream 102 and a second sub-stream 104. First sub-stream 102 is discharged to atmosphere. Second sub-stream 104 is compressed in a compressor 106 and channeled to lockhopper assembly 62 at a predefined pressure to facilitate adjusting a pressure within lockhopper assembly 62.

Lockhopper assembly 62 channels solid CO₂ 56 towards heat exchanger 60 to transfer heat from solid CO₂ 56 to heat exchange fluid 54 being channeled through heat exchanger 60. Solid CO₂ 56 is gravity fed to heat exchanger 60 to transfer heat from heat exchange fluid 54 to solid CO₂ 56 to convert at least of portion of solid CO₂ 58 to liquid CO₂ 58, and to cool heat exchange fluid 54 to recover a refrigeration value from solid CO₂ 56. Heat exchanger 60 discharges liquid CO₂ 58 to CO₂ utilization system 52. In addition, heat exchanger 60 channels heat exchange fluid 54 towards pre-cooling system 44 for use in cooling flue gases 28.

In the exemplary embodiment lockhopper assembly 62 and heat exchanger 60 each include an internal pressure equal to about 7 atm to facilitate preventing re-sublimation of solid CO₂ 56 to gaseous CO₂ within cavity 78, and to maintain CO₂ in solid-liquid phase equilibrium. Lockhopper assembly 62 channels solid CO₂ 56 having a temperature equal to about -102°C towards heat exchanger 60. Heat exchange fluid 54 is channeled into heat exchanger 60 includes a temperature equal to about -51°C. As solid CO₂ 56 contacts of heat exchange tube 70, at least a portion of solid CO₂ 56 is converted to liquid CO₂ 58. Liquid CO₂ 58 discharged from heat exchanger 60 includes a fluid temperature equal to about -51°C. Heat exchange fluid 54 discharged from heat exchanger 60 includes a fluid temperature equal to about - 80°C.

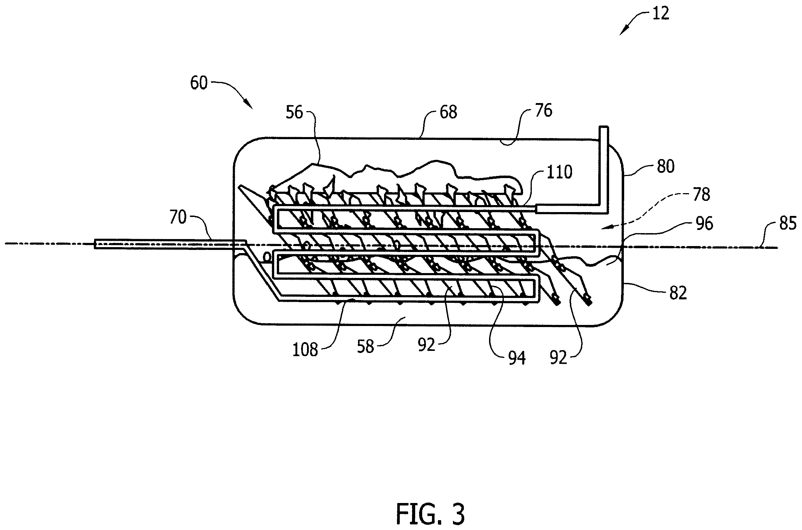

FIGS. 3-4 are schematic views of embodiments of heat exchange assembly 12. Identical components shown in FIGS. 3-4 are labeled with the same reference numbers used in FIG. 2. In the embodiment, heat exchange tube 70 extends between a first section 108 and a second section 110. First section 108 is oriented within lower portion 82 such that first section 108 is at least partially submerged within liquid CO₂ 58. Second section 110 is oriented within upper portion 80, and is configured to support solid CO₂ 56 such that solid CO₂ 56 is oriented above liquid CO₂ pool 96. Fins 92 are coupled to heat exchange tube 70 and are oriented obliquely with respect to centerline axis 85 to facilitate channeling liquid CO₂ 58 from upper portion 80 to lower portion 82. One or more fins 92 are coupled to tube first section 108, and are at least partially submerged within liquid CO₂ 58.

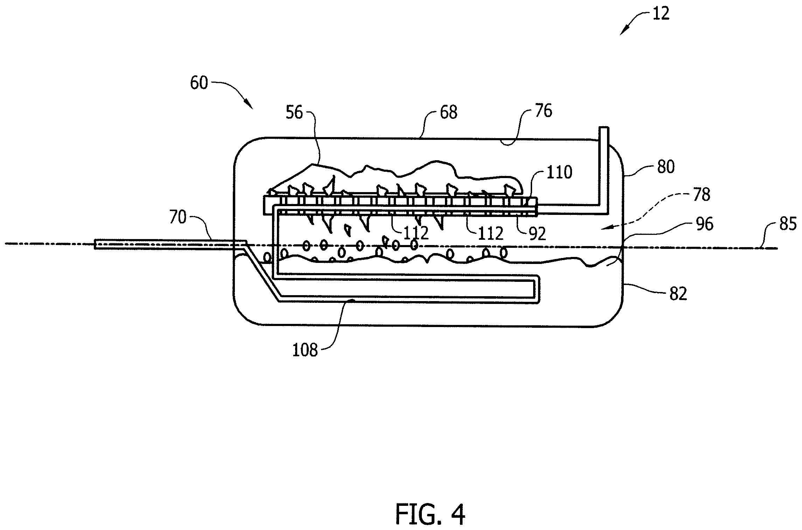

Referring to FIG. 4, in another embodiment, each fin 92 is coupled to second section 110 of heat exchange tube 70 such that each fin 92 is oriented within upper portion 80. Each fin 92 is oriented with respect to an adjacent fin 92 such that a plurality of openings 112 are defined between adjacent fins 92. Each opening 112 is sized and shaped to channel liquid CO₂ 58 from upper portion 80 to lower portion 82.

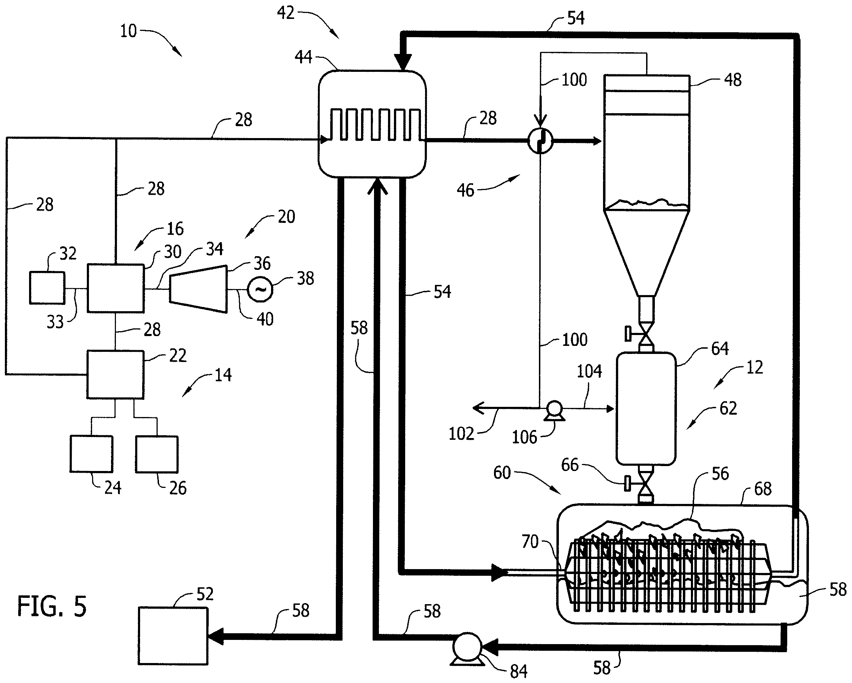

FIG. 5 is another embodiment of power generation system 10. Identical components shown in FIG. 5 are labeled with the same reference numbers used in FIG. 1. In an alternative embodiment, heat exchanger 60 channels cold liquid CO₂ 58 to flue gas pre-cooling system 44 for use in pre-cooling flue gases 28. More specifically, liquid CO₂ pump 84 channels liquid CO₂ 58 from heat exchanger 60 to flue gas pre-cooling system 44. In addition, flue gas pre-cooling system 44 channels liquid CO₂ 58 to CO₂ utilization system 52. In one embodiment, liquid CO₂ pump 84 is configured to channel liquid CO₂ 58 through flue gas pre-cooling system 44, and to CO₂ utilization system 52.

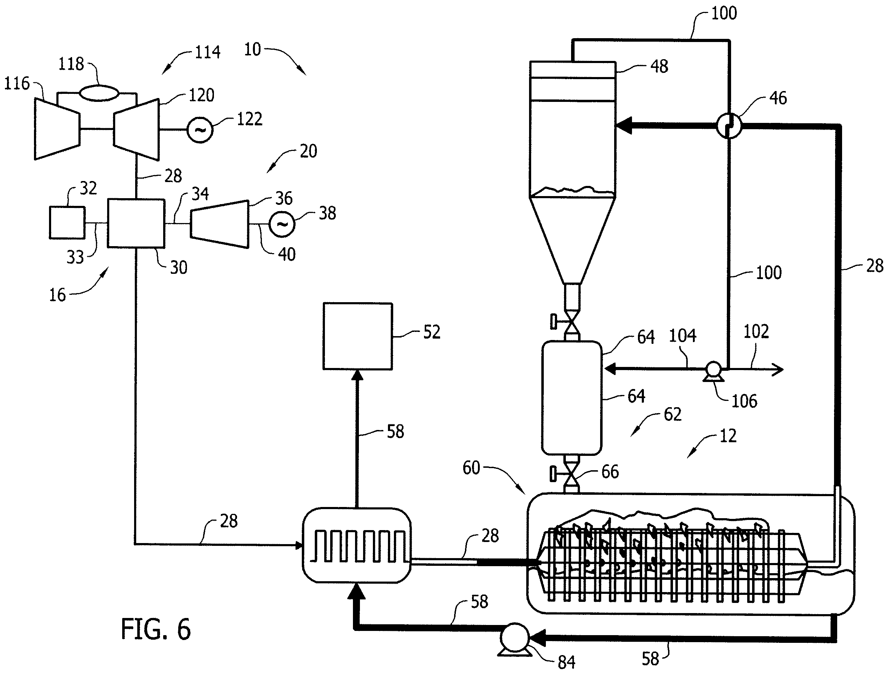

FIG. 6 is an alternative embodiment of power generation system 10. Identical components shown in FIG. 6 are labeled with the same reference numbers used in FIG. 1. In an alternative embodiment, power generation system 10 includes a top cycle or gas turbine engine assembly 114 and a bottom cycle or steam turbine engine 20. Gas turbine engine assembly 114 includes a compressor 116, a combustor 118 downstream of compressor 116, and a turbine 120 downstream of combustor 118 and powered by gases discharged from combustor 118. Turbine 120 drives an electrical generator 122. In addition, turbine 120 discharges flue gases 28 to HRSG 30 for generating steam from flue gases 28.

In the exemplary embodiment, heat exchanger 60 is coupled downstream of pre-cooling system 44 for receiving a flow of flue gases 28 from pre-cooling system 44. During operation HRSG 30 and/or turbine 120 discharge flue gases 28 to pre-cooling system 44 to transfer heat from flue gases 28 to liquid CO₂ 58. Pre-cooling system 44 channels flue gases 28 to heat exchanger 60 to transfer heat from flue gases 28 to solid CO₂ 56 to form liquid CO₂ 58 from solid CO₂ 56 to facilitate cooling flue gases 28, and to recover a refrigeration value from solid CO₂ 56. Heat exchanger 60 channels cooled flue gases 28 to cooling system 46 to cool flue gases 28 to form solid CO₂ from gaseous CO₂ suspended within flue gases 28. Cooling system 46 channels solid CO₂ and flue gases 28 to CO₂ separator 48 to separate solid CO₂ from flue gases 28, and discharge solid CO₂ to lockhopper assembly 62. Lockhopper assembly 62 discharges solid CO₂ 56 to heat exchanger 60 to transfer heat from solid CO₂ 56 to flue gases 28 being channeled through heat exchanger 60, and to form liquid CO₂ 58 from solid CO₂ 56. Heat exchanger 60 channels liquid CO₂ 58 to pre-cooling system 44 to facilitate transferring heat from flue gases 28 to liquid CO₂ 58. In addition, pre-cooling system 44 channels liquid CO₂ 58 to CO₂ utilization system 52.

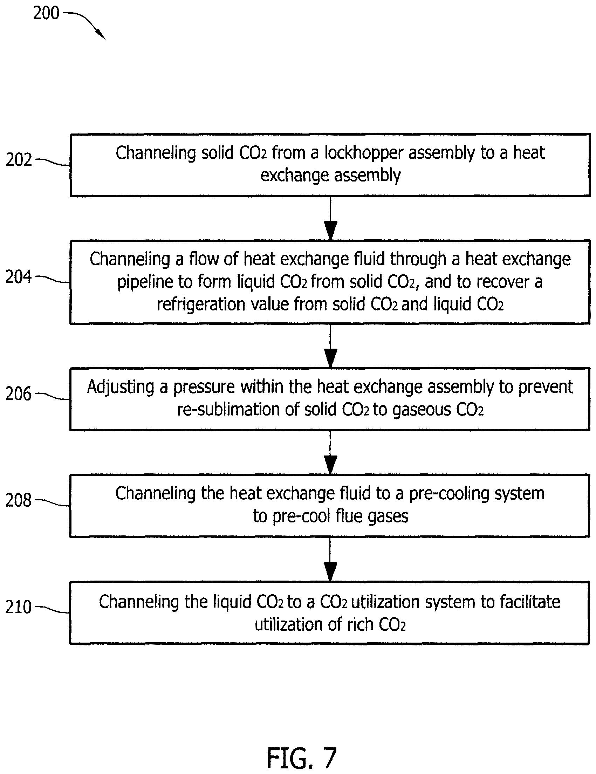

FIG. 7 is a flow chart of an exemplary method 200 that may be used to treat CO₂ that is generated during an operation of power generation system 10. In the exemplary embodiment, method 200 includes channeling 202 solid CO₂ from lockhopper assembly 62 to heat exchange assembly 12, and channeling 204 a flow of heat exchange fluid 54 through heat exchange tube 70 to facilitate a transfer of heat from solid CO₂ to heat exchange fluid 54 to form liquid CO₂ from solid CO₂, and to recover a refrigeration value from solid CO₂ and liquid CO₂. Method 200 also includes adjusting 206 a pressure within housing 68 to maintain a housing pressure within a predefined range of pressures to prevent re-sublimation of solid CO₂ to gaseous CO₂. Heat exchange fluid 54 is channeled 208 from heat exchange assembly 12 to pre-cooling system 44 to pre-cool flue gases 28. Liquid CO₂ is channeled 210 from heat exchange assembly 12 to a CO₂ utilization system 52 to facilitate utilization of rich CO₂.

The above-described systems and methods overcome at least some disadvantages of known gas treatment systems by providing a gas treatment system that includes a heat exchange assembly configured to transfer heat from a heat exchange fluid to solid CO₂ to facilitate recovering a refrigeration value from solid CO₂. In addition, the gas treatment system includes a heat exchange assembly that is configured to maintain CO₂ in solid-liquid phase equilibrium to enable the heat exchange assembly to transfer heat from solid CO₂ to a heat exchange fluid to facilitate forming liquid CO₂ for use in pre-cooling a flue gas. By providing a gas treatment system that includes a heat exchange assembly that recovers a refrigeration value from solid CO₂, the cost of treating CO₂ suspended within a flue gas is reduced as compared to known gas treatment systems.

Exemplary embodiments of systems and methods for treating carbon dioxide are described above in detail. The systems and methods are not limited to the specific embodiments described herein, but rather, components of systems and/or steps of the method may be utilized independently and separately from other components and/or steps described herein. For example, the systems and method may also be used in combination with other gas treatment systems and methods, and are not limited to practice with only the gas treatment system as described herein. Rather, the exemplary embodiment can be implemented and utilized in connection with many other gas treatment system applications.

Although specific features of various embodiments of the invention may be shown in some drawings and not in others, this is for convenience only. In accordance with the scope of the claims, any feature of a drawing may be referenced and/or claimed in combination with any feature of any other drawing.

## Claims

1. A gas treatment system (42) for use in treating carbon dioxide (CO₂) in a flue gas, said gas treatment system comprising:
a cooling system (46) coupled to a source of flue gas and configured to receive a flow of flue gas from the source, said cooling system configured to cool CO₂ within the flue gas to form solid CO₂; and
a heat exchange assembly (12), the heat exchange assembly comprising:
a housing (68) comprising an inlet (72), an outlet (74), and an inner surface (76) that defines a cavity (78) extending between said inlet and said outlet, said housing configured to receive solid CO₂ through said inlet;
a lockhopper assembly (62) coupled to said housing inlet (72) for enabling solid CO₂ to be gravity fed into said housing cavity (78) through said inlet and coupled to said cooling system for receiving solid CO₂ therefrom; and
at least one heat exchange tube (70) extending through said housing, said heat exchange tube oriented to contact solid CO₂ to facilitate transferring heat from solid CO₂ to a heat exchange fluid being channeled through said heat exchange tube to facilitate converting at least a portion of solid CO₂ into liquid CO₂, said heat exchange assembly configured to recover a refrigeration value from the solid CO₂ and transfer at least a portion of the recovered refrigeration value to a flue gas,
wherein said housing inner surface (76) extends between an upper portion (80) and a lower portion (82) extending below said upper portion, said lower portion configured to contain liquid CO₂ therein;
wherein said at least one tube (70) includes an outer surface (90) and a plurality of fins (92) extending outwardly from said tube outer surface, each fin (92) of said plurality of fins being oriented to support solid CO₂ within said upper portion (80), and to channel liquid CO₂ formed within the cavity (78) to the lower portion (82);
wherein said at least one tube (70) extends between a first section (108) and a second section (110), the first section (108) oriented within said lower portion (82) and the second section (110) oriented within said upper portion (80); and
wherein said gas treatment system (42) is arranged so that, in operation, said heat exchange fluid exchanges heat at the first section (108) before exchanging heat at the second section (110).

2. A gas treatment system (42) in accordance with Claim 1, wherein said housing (68) is configured to maintain said cavity within a predefined range of pressures to prevent re-sublimation of solid CO₂ to gaseous CO₂.

3. A gas treatment system (42) in accordance with Claim 1 or 2, wherein adjacent fins (92) are oriented such that a plurality of openings (112) are defined between adjacent fins, and each opening is sized to channel liquid CO₂ from said upper portion (80) to said lower portion (82).

4. A gas treatment system in accordance with Claim 1, further comprising a CO₂ sequestration system (52) coupled to said heat exchange assembly (12) for receiving a flow of liquid CO₂ from said heat exchange assembly (12).

## Patentansprüche

1. Gasbehandlungssystem (42) zum Gebrauch beim Behandeln von Kohlendioxid (CO₂) in einem Rauchgas, das Behandlungssystem umfassend:
ein Kühlsystem (46), das an eine Rauchgasquelle gekuppelt ist und zum Aufnehmen einer Rauchgasströmung aus der Quelle konfiguriert ist, wobei das Kühlsystem zum Kühlen von CO₂ innerhalb des Rauchgases zum Ausbilden von festem CO₂ konfiguriert ist; und
eine Wärmeaustauschbaugruppe (12), wobei die Wärmeaustauschbaugruppe folgendes umfasst:
ein Gehäuse (68), das einen Einlass (72), einen Auslass (74) und eine Innenfläche (76) umfasst, die einen Hohlraum (78) definiert, der zwischen dem Einlass und dem Auslass verläuft, wobei das Gehäuse zum Aufnehmen von festem CO₂ durch den Einlass konfiguriert ist;
eine Schleusenbaugruppe (62), die an den Gehäuseeinlass (72) gekuppelt ist, um zu ermöglichen, dass festes CO₂ durch Schwerkrafteinwirkung durch den Einlass in den Gehäusehohlraum (78) zugeführt wird, und die an das Kühlsystem zum Aufnehmen von festem CO₂ davon gekuppelt ist;
zumindest ein Wärmerohr (70), das durch das Gehäuse verläuft, wobei das Wärmerohr zum Berühren von festem CO₂ ausgerichtet ist, um die Überführung von Wärme vom festen CO₂ zu einem Wärmeaustauschfluid zu ermöglichen, das durch das Wärmerohr kanalisiert wird, um das Umwandeln von zumindest einem Anteil von festem CO₂ in flüssiges CO₂ zu ermöglichen, wobei die Wärmeaustauschbaugruppe zum Wiedergewinnen eines Kühlwerts aus dem festen CO₂ und zum Überführen von zumindest einem Anteil des wiedergewonnenen Kühlwerts zu einem Rauchgas konfiguriert ist,
wobei die Gehäuseinnenfläche (76) zwischen einem oberen Abschnitt (80) und einem unteren Abschnitt (82) verläuft, welcher unter dem oberen Abschnitt verläuft, wobei der untere Abschnitt zum Enthalten von flüssigem CO₂ darin konfiguriert ist;
wobei das zumindest eine Rohr (70) eine Außenfläche (90) und mehrere Rippen (92) enthält, die von der Rohraußenfläche nach außen verlaufen, wobei jede Rippe (92) der mehreren Rippen zum Unterstützen von festem CO₂ innerhalb des oberen Abschnitts (80) und zum Kanalisieren von flüssigem CO₂ innerhalb des Hohlraums (78) zum unteren Abschnitt (82) ausgerichtet ist;
wobei das zumindest eine Rohr (70) zwischen einer ersten Sektion (108) und einer zweiten Sektion (110) verläuft, wobei die erste Sektion (108) innerhalb des unteren Abschnitts (82) ausgerichtet ist und die zweite Sektion (110) innerhalb des oberen Abschnitts (80) ausgerichtet ist; und
wobei das Gasbehandlungssystem (42) derart angeordnet ist, dass das Wärmeaustauschfluid im Betrieb Wärme an der ersten Sektion (108) tauscht, bevor es Wärme an der zweiten Sektion (110) tauscht.

2. Gasbehandlungssystem (42) nach Anspruch 1, wobei das Gehäuse (68) zum Erhalten des Hohlraums innerhalb eines vordefinierten Bereichs von Drücken konfiguriert ist, um Resublimation von festem CO₂ in gasförmiges CO₂ zu verhindern.

3. Gasbehandlungssystem (42) nach einem der Ansprüche 1 oder 2, wobei benachbarte Rippen (92) derart ausgerichtet sind, dass mehrere Öffnungen (112) zwischen benachbarten Rippen definiert sind und jede Öffnung zum Kanalisieren von flüssigem CO₂ vom oberen Abschnitt (80) zum unteren Abschnitt (82) bemessen ist.

4. Gasbehandlungssystem nach Anspruch 1, ferner umfassend ein Chor Maskierungssystem (52), das zum Aufnehmen einer Strömung von flüssigem CO₂ von der Wärmeaustauschbaugruppe (12) an die Wärmeaustauschbaugruppe (12) gekuppelt ist.

## Revendications

1. Système de traitement de gaz (42) pour utilisation dans le traitement de dioxyde de carbone (CO₂) dans un gaz de fumée, ledit système de traitement de gaz comprenant :
un système de refroidissement (46) couplé à une source de gaz de fumée et configuré pour recevoir un flux de gaz de fumée de la source, ledit système de refroidissement étant configuré pour refroidir le CO₂ dans le gaz de fumée pour former du CO₂ solide ; et
un ensemble d'échange de chaleur (12), l'ensemble d'échange de chaleur comprenant :
un boîtier (68) comprenant une entrée (72), une sortie (74) et une surface interne (76) qui définit une cavité (78) s'étendant entre ladite entrée et ladite sortie, ledit boîtier étant configuré pour recevoir du CO₂ solide à travers ladite entrée ;
un ensemble de blocage de trémie (62) couplé à ladite entrée de boîtier (72) pour permettre d'acheminer du CO₂ solide sous l'effet de la pesanteur dans ladite cavité de boîtier (78) à travers ladite entrée et couplé audit système de refroidissement pour en recevoir du CO₂ solide ; et
au moins un tube échangeur de chaleur (70) s'étendant à travers ledit boîtier, le tube échangeur de chaleur étant orienté pour venir en contact avec le CO₂ solide afin de faciliter le transfert de chaleur du CO₂ solide à un fluide d'échange de chaleur qui est canalisé à travers ledit tube échangeur de chaleur pour faciliter la conversion d'au moins une partie du CO₂ solide en CO₂ liquide, ledit ensemble d'échange de chaleur étant configuré pour récupérer une valeur de réfrigération du CO₂ solide et transférer au moins une partie de la valeur de réfrigération récupérée à un gaz de fumée,
dans lequel ladite surface interne (76) du boîtier s'étend entre une partie supérieure (80) et une partie inférieure (82) s'étendant en dessous de ladite partie supérieure, ladite partie inférieure étant configurée pour contenir du CO₂ liquide ;
dans lequel ledit au moins un tube (70) comprend une surface externe (90) et une pluralité d'ailettes (92) s'étendant vers l'extérieur de ladite surface externe du tube, chaque ailette (92) de ladite pluralité d'ailettes étant orientée pour supporter du CO₂ solide dans ladite partie supérieure (80) et pour canaliser du CO₂ liquide formé dans la cavité (78) dans la partie inférieure (82) ;
dans lequel ledit au moins un tube (70) s'étend entre une première section (108) et une seconde section (110), la première section (108) étant orientée dans ladite partie inférieure (82) et la seconde section (110) étant orientée dans ladite partie supérieure (80) ; et
dans lequel ledit système de traitement de gaz (42) est agencé de sorte que, en service, ledit fluide d'échange de chaleur échange de la chaleur dans la première section (108) avant d'échanger de la chaleur dans la seconde section (110).

2. Système de traitement de gaz (42) selon la revendication 1, dans lequel ledit boîtier (68) est configuré pour maintenir ladite cavité dans une plage prédéfinie de pressions afin d'empêcher une re-sublimation du CO₂ solide en CO₂ gazeux.

3. Système de traitement de gaz (42) selon la revendication 1 ou 2, dans lequel des ailettes adjacentes (92) sont orientées de sorte qu'une pluralité d'ouvertures (112) soit définie entre des ailettes adjacentes et que chaque ouverture soit calibrée pour canaliser du CO₂ liquide de ladite partie supérieure (80) à ladite partie inférieure (82).

4. Système de traitement de gaz (42) selon la revendication 1, comprenant en outre un système de séquestration de CO₂ (52) couplé audit ensemble d'échange de chaleur (12) pour recevoir un flux de CO₂ liquide dudit ensemble d'échange de chaleur (12).
